(19) Europäisches Patentamt
European Patent Office
Office européen des brevets

(11) **EP 3 255 314 A1**

(12) **EUROPEAN PATENT APPLICATION**

(43) Date of publication:
**13.12.2017 Bulletin 2017/50**

(51) Int Cl.:
***F16H 57/00*** *(2012.01)* ***G06F 17/50*** *(2006.01)*

(21) Application number: **17172902.3**

(22) Date of filing: **24.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.05.2016 GB 201609531**
**17.10.2016 GB 201617550**

(71) Applicant: **Romax Technology Limited**
**Nottingham, Nottinghamshire NG7 2TU (GB)**

(72) Inventors:
- **James, BARRY**
  **Cranage, CW4 8EX (GB)**
- **Platten, Michael**
  **Nottingham, Nottinghamshire NG9 2TE (GB)**
- **Jain, Sharad**
  **Nottingham, Nottinghamshire NG7 1HR (GB)**
- **Taylor, Kathryn**
  **Nottingham, Nottinghamshire NG9 2RE (GB)**
- **Halse, Christopher**
  **Nottingham, Nottinghamshire NG9 3PG (GB)**
- **Hoppert, Maik**
  **04107 Leipzig (DE)**

(54) **PLANETARY GEARSETS**

(57) A method for designing a planetary gearset meeting one or more design targets is described. Initially, a size and ratio of the planetary gear set, and the number of planet gears for the planetary gearset is specified. All valid combinations of tooth numbers and planet numbers that satisfy one or more constraints are then calculated. From these, a starting combination is selected and a value for a design target for the gear set is calculated. One or more of the macro-geometry parameters are modified, and the macrogeometry parameters are chosen such that the positive effects of one macrogeometry parameter on the design target counteract any negative effects of another macrogeometry parameter. In this way, a design for planetary gearset meeting the one or more design targets is produced. Also disclosed is a method additionally calculating a sideband distribution resulting from the selected combination. The side band distribution is compared with a design target for sideband distribution and parameters are varied as necessary to achieve the required design.

Figure 2

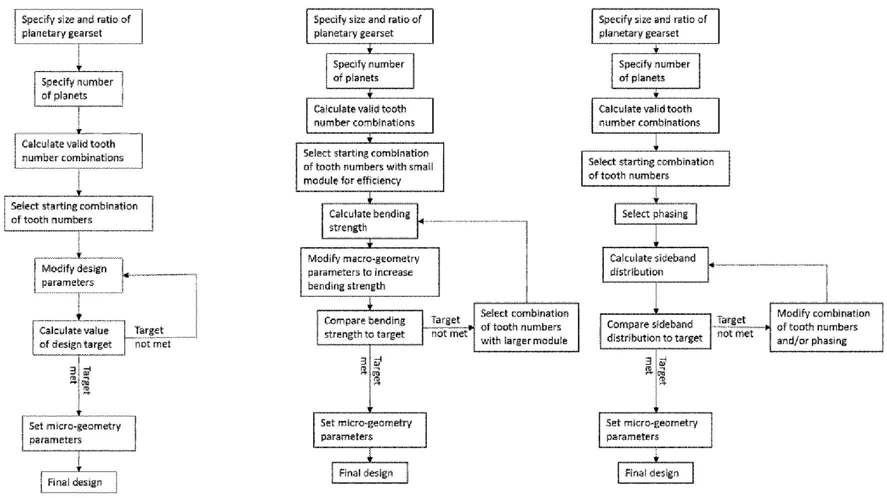


EP 3 255 314 A1

## Description

### Technical Field

The present invention relates to approaches for designing planetary gearsets.

### Background Art

Planetary gearsets have various advantages over parallel gearsets for certain applications. They can fit a larger gear ratio into a smaller space envelope, and multiple planets allow the load to be split between parallel paths so that a greater load can be transmitted in a smaller space. This high power density is desirable in some applications where space is limited. Planetary gearsets have lower sensitivity to certain manufacturing errors due to self-centring capability, and the concave shape of internal gears means that the base of the tooth is thicker than in an equivalent external gear tooth resulting in increased bending strength.

A planetary gear design methodology should not only result in better gearset designs, but also save time and costs in the design process. Improving efficiency has many benefits; as well as a reduction in energy consumption and associated cost savings, more efficient systems have reduced cooling requirements. This means potentially lower volumes of lubricant, longer lubricant life, and better durability for the system as a whole. More durable designs are safer and last for longer, reducing the lifetime cost and energy consumption.

Aspects of product performance are defined as a design target. Design targets can include (but are not limited to): product performance, efficiency, packaging within the space constraints, cost, weight, structural deflections and stress, durability and fatigue, bending and contact strength (which can be measured using safety factors), manufacturability, thermal performance, transmission error, sideband distribution, generation of audible noise, mechanical failure due to dynamic input loads, generation of dynamic loads adverse to the user and/or environment, speed and ratio changing, and satisfactory interaction with a control system.

Designing a gearset is complex and time consuming. The engineer needs to know that the gearset is fit for purpose before it is made and to determine this various analytical methods are used to judge the performance or likelihood of failure, followed by optimisation to change the product definition so as to maximise the product performance. Analysis, either by mathematical simulation or other methods such as benchmarking (comparison with similar products), is typically carried out in a computer program and the domain of computer-aided engineering (CAE) has grown based on this intention.

To assess the different design targets and aspects of performance, different mathematical analysis methods are used and these require different models of the system, consisting of different data. As a result, it is typical for CAE models for each failure mode to be built specifically for that failure mode. Indeed, often CAE packages are developed specifically for the purpose of assessing a given design target.

The design of the system evolves as a result of a process, as opposed to undergoing an instantaneous moment of creation. Some of the parameters defining the design are defined at the start of the process, others are not defined until the end.

As a result, different analyses of product performance are carried out at different stages in the design process, even for the same aspect of product performance. Not all the methods are possible at the start. Typically, only relatively simple analyses are possible when the product definition is light, and it is only towards the end of the design process that more complex analyses are possible.

Moreover, for the same design target or aspect of performance, a simple analysis may be carried out early in the design process and then the a more complex analysis may be carried out later on, because the product definition is more mature and contains greater fidelity. Often, these different levels of fidelity require different CAE packages, with all the problems of data transfer, data updates within the design process etc.

In addition, there is a risk that the user will use a detailed analysis when the information describing the system merits only a simple analysis; this may lead to errors in the analysis, yet the user may not know.

There is a further problem with complex analyses. The purpose of any analysis is to guide the design of the product, and so the value of the analysis comes when the result of the analysis is correctly interpreted/understood by the engineering team and the corresponding design decision is made. For a result to be understood, it needs to "make sense" to the engineers and correspond to the way that the engineers understand the system to perform. However, once an analysis becomes highly complex, it is possible that the result will be too complex to be understood or that it does not match the engineers' fundamental understanding of its performance. Thus, even though the analysis result may be the most accurate analysis possible, it will be discarded in the engineering decisions regarding the system.

It is an irony that the engineers' fundamental understanding of the system performance is very closely related to the simple analyses which may have been carried out at the start of the design process. Thus, the tension exists - there is a desire to increase complexity since this is assumed to increase accuracy and product performance, yet take this too far and complex analysis ceases to be of use.

As the design matures through the design process, the increase in data definition represents an increase in investment of time and money into the design, so any identification of potential issues with the design needs to be achieved at the earliest possible opportunity, thereby minimising the financial cost of iterative re-work.

This points to a final tension in the process. The process needs to provide speed of modelling and analysis to give the productivity, yet include all the system influences to provide the accuracy. Analysing a larger system with all of the system influences tends to lead towards a more complex analysis, yet as has been discussed this leads to problems with speed of modelling and analysis and in data interpretation.

The invention described here seeks to resolve this tension by defining a step-by-step design process, where at each stage the appropriate level of fidelity is defined for the input data, physics, and modelling approach, to minimise iteration and enable the designer to make appropriate engineering decisions at each stage of the process.

Much work has been done on optimising gear pairs, and rather less on planetary gearsets. Design processes generally fall into three categories:

"brute force" methods that analyse many combinations of input variables, and are therefore computationally intensive;

genetic algorithms that find the optimum solution quickly but do not provide any insight into the interactions between design parameters or contribute to understanding of why the optimised design is best;

manual step-by-step processes that require looping back several times to make a different variable selection if constraints and targets are not met. Most of these processes are applicable to gear pairs only, and do not address the challenges of planetary gearset design. One example is an optimistaon process for low-loss gears and is a cyclical loop comsisting of the steps of: corrections for laod reductions in area of contact with high sliding speed; reduction of module down to tooth fracture limit; reduction of transverse contact ratio down to pitting capacity limit; tooth root fillet radius as large as possible; increase of pressure angle; increase of face width; and helix angle for adequate overlap contact ratios [Hohn et al. (2007); Hohn, B.R., Michaelis, K. and Wimmer, A. (2007) 'Low Loss Gears', Gear Technology, no. June 2007, pp. 28-35.]. Another for designing tooth geometries consists of the steps of: reducing gear modulus and increase the number of teeth, keeping constant the centre distance using high positive profile shifts; use standard cutting tools with 20.deg. pressure angles; impose a minimum value of the normal contact ratio close to 1.0; impose a total contact ratio close to 2.0; and keep constant the gear safety factors against tooth route breakage and surface pressure [Magalhaes et al. (2010); Magalhães, L., Martins, R., Locateli, C. and Seabra, J. (2010) 'Influence of tooth profile and oil formulation on gear power loss', Tribology International, vol. 43, no. 10, pp. 1861-1871 [Online]. DOI: 10.1016/j.triboint.2009.10.001]. A further approach is shown in Figure 1 [Childs (2014); Childs, P.R.N. (2014) Mechanical Design Engineering Handbook, Elsevier].

There are various tools within specialist software packages that can be used to assist in gear design. These tend to be user-driven manual tools in which some of the gear geometry parameters can be changed. Design of Experiments tools can be used to run a full-factorial analysis of combinations of input parameters, and plot the values of design targets for the resulting candidate designs. For example, a gear rating calculation can be carried out, so that the user can see the effect of geometry changes on bending and contact safety factors.

Although these tools are useful for gear design, they do have the limitation of being manually driven so the user must use their own expertise in deciding how to alter the gear geometry, and do not consider all of the design targets (efficiency, durability, NVH). They are therefore not a substitute for a complete design process that guides the user and considers the trade-offs between design targets at each stage.

There are a number of problems associated with current practice disclosed above, and these are identified below.

When selecting a tooth numbers combination, assembly constraints of the planetary gearset are considered. Rules of thumb exist on factorising/ non-factorising tooth and planet numbers, but since one is better for torsional vibration and the other for radial vibration, it is not always clear which is most appropriate for a given application. Usually there is no consideration of durability, efficiency or noise (neither TE nor sidebands) when the tooth numbers are chosen.

At the macro-geometry stage, usually durability (e.g. to ISO 6336) is considered. It is known that contact ratio affects transmission error, but this is for a single mesh only, and transmission error from the planetary gear set involves interactions between the different meshes. There is no indication of sidebands. Efficiency can be calculated, but this is very approximate and based on gear pairs and not planetary gearsets. Even when planetary efficiency is calculated, the planetary is treated as a series of individual meshes and not an assembly. No account is taken of the impact of lubricant other than viscosity.

At the micro-geometry stage (with loaded tooth contact analysis and system deflections), the transmission error of individual meshes and even of the planetary gear set can be calculated, but not sidebands. Durability and efficiency can be calculated, but there is no guidance as to how to improve efficiency. No account is taken of the impact of lubricant other than viscosity.

At each of these three stages there are trade-offs between the three design targets. Some changes will be better for one target and worse for another, yet the guidance is incomplete, meaning there is a risk that the gearbox will not be fit for purpose.

Also, the impact of one decision cannot be traced through the whole process. In moving from each stage to the next there is a one to many correspondence. The final definition of the gearset (tooth and planet numbers, macrogeometry, microgeometry) is needed to determine the efficiency, durability and noise (both transmission error and sidebands). Decisions made at the start of the process (e.g. tooth numbers) impact the performance of the final design at the end of the process, yet tracing this causality is not possible so designers cannot easily find their way to the designs that are fit for purpose.

## Brief Description of the invention

According to a first aspect of the invention, there is provided a method for designing a planetary gearset meeting one or more design targets. The method comprises the following steps:

a. specifying a size and ratio of the planetary gear set;
b. specifying a number of planet gears for the planetary gearset;
c. calculating all valid combinations of tooth numbers and planet numbers that satisfy one or more constraints;
d. selecting a starting combination;
e. calculating a value for a design target for the gear set; and
f. modifying one or more macro-geometry parameters.

In the above step f), the macrogeometry parameters are chosen such that the positive effects of one macrogeometry parameter on the design target counteract any negative effects of another macrogeometry parameter and a design for planetary gearset meeting the one or more design targets is produced.

## Brief Description of Drawings

Embodiments of the present invention will now be described by way of example and with reference to the accompanying drawings, in which:

Figure 1 illustrates a gear design process as defined by Childs (2014), with comments added in italics;

Figure 2 illustrates three embodiments of the invention;

Figure 3 illustrates an example of different phasing in a 4-planet gearset;

Figure 4 illustrates the RMS (root mean square) of signal amplitude over a range of frequencies, which can be used as a noise metric;

Figure 5 illustrates the effect of varying profile shift coefficient X (Figure taken from Stadtfeld, 2013 [[Stadtfeld, H. J. (2013) 'Operating Pressure Angle', Gear Technology, May 2013, pp. 57-58.]]);

Figure 6 illustrates the shape of gear teeth with pressure angles of 10, 20, 30, and 45 degrees (left to right);

Figure 7 illustrates the efficiency of two lubricants with similar viscosity and different additives, calculated using ISO 14179 (left) and by using test data from a mini traction machine (right);

Figure 8 illustrates an example of profile crowning and lead crowning;

Figure 9 illustrates a combination of profile (barrelling)/lead crowning and an example of linear tip relief;

Figure 10 is a schematic of tip relief;

Figure 11 illustrates a comparison of linear and parabolic tip relief.

**Detailed Description of the Invention**

The invention is a multi-stage design process for planetary gearsets, which starts with a very simple gearset definition (size and ratio) and adds detail. At each stage the trade-offs between multiple design targets (including efficiency, durability, and NVH) are considered. The design process can quickly generate a set of candidate designs, evaluate against a set of design targets, and identify optimal planetary gearset designs. The assessment of NVH performance can include consideration of sidebands. The efficiency calculation can include the effect of the lubricant (additives and friction modifiers, not just viscosity).

This design process has been developed by understanding how the design targets vary with the values of design variables, and does not just provide results, but also guides the designer to make design decisions which lead to the best trade-off between the targets. The design methodology has been validated via case studies and numerical modelling, and can be implemented in a software program.

The advantages of the invention may be summarised as follows:

All of the relevant physics is included in the three key design targets (efficiency, durability, NVH)
Relevant physical phenomena are identified at each stage of the design process, and
included only if it is affecting the design decision to be made at that stage
Trade-offs identified at each stage of the design process, with guidance on how to make performance better in each case
Traceability of causality
Inclusion of the effect of lubricant on efficiency
Potential to supply data to the lubricant manufacturer to enable better lubricant design

The method for designing a planetary gearset meeting one or more design targets comprises a number of steps, and three embodiments are shown in Figure 2.

The first step is to specify a size and ratio of the planetary gear set. In general, the size and ratio of a planetary gearset is defined by the application. The size (outer diameter and face width) can be limited by available packaging space.

Patent Application no. US 2013/0085722 A1 describes an approach in which simple "sizing" methods are used for external and planetary gear sets. Whilst these methods are not as accurate or sophisticated as rating methods (such as ISO 6336 or AGMA 2001), they are usable by engineers who are not familiar with the details of gear design and so can be used for the initial stages of transmission and gear design. Further, all the gears defined in this way have a ratio assigned to them as one of the properties. Such sizing methods require "constants", related to the application and material used, which can be obtained by analysing existing transmissions using the same simple analysis methods.

The method for planetary gearsets relates torque capacity, ring gear (or sun gear) diameter, face width, and ratio. A constant, ring/sun ratio, ring gear diameter and face width can be used for calculating the torque capacity. Alternatively, a constant, torque, number of planets, ring/sun ratio and face width can be used for calculating the recommended ring gear diameter. A safety factor can be calculated by dividing the actual ring gear diameter by the recommended ring gear diameter.

The next step is to specify a number of planet gears for the planetary gearset.

Tooth numbers and planet numbers are discrete rather than continuous variables, and subject to many constraints, so it makes sense to fix these at the beginning of the design process. Once the tooth numbers and planet numbers have been determined, the rest of the design process is linear and other design variables are continuous.

Depending on the application, the choice of planet number can be:

based on an existing design;
set to three for even load-sharing and minimum cost and weight;
set to maximum for increased load capacity in high-load applications;
chosen such that the combination of planet numbers and tooth numbers reduces or eliminates sidebands or other vibration modes.

An experimental study on the efficiency of planetary gearsets investigated the effect of number of planets. It is known that load-dependent power losses (due to sliding contact between the gear teeth) are similar for gearsets with different numbers of planets, since there is a larger number of meshes but reduced load on each. Load-independent losses (mainly churning losses) increase slightly with increasing number of planets. Changing the number of planets is therefore not a viable way to optimise for efficiency.

Another disadvantage of systems with more planets is that they tend to be more sensitive to manufacturing tolerances, e.g. errors in the carrier pin position, and it is difficult to achieve even load-sharing. Three planets is preferable for load-sharing - if the sun (or ring) is allowed to float it will find a position such that the load-sharing is even.

The number of planets is important for sidebands, as will be discussed later.

The first step in selecting tooth numbers is to generate options for tooth number combinations that satisfy the following constraints:

ratio requirement (within tolerance);
assembly constraints;
"theoretical" tooth numbers;
hunting and non-factorising tooth numbers (optional); and
equal planet spacing (optional)

Given a specified range of modules, the next step is calculating all valid combinations of tooth numbers and planet numbers that achieve a specified gear ratio within a specified tolerance. This set of designs can then be narrowed down by further constraints. Table 1 lists constraints that can be applied, in terms of the planet number $N_p$ and tooth numbers $Z_s$, $Z_p$ and $Z_r$ for the sun, planet, and ring gears respectively.

**Table 1 - Constraints applied to calculate valid tooth number combinations**

| Constraint | Mathematical formulation |
|---|---|
| Ratio requirement | $Z_s/Z_c$ is within a tolerance of the ratio specified by the user |
| Tooth numbers on the ring, sun, and planet must be compatible. The actual tooth numbers can vary from this equation for "theoretical" tooth numbers if the profile shift makes up for the non-standard centre distance | $Z_r - Z_s = 2 Z_p$ |
| Maximum number of planets that fit in the space available without interference between adjacent planets | $\max N_p = \text{floor}\left(\pi \Big/ \sin^{-1}\left(\frac{Z_p}{Z_p + Z_s}\right)\right)$ |
| Equal spacing of planet gears (optional) | $(Z_r + Z_s)/N_p$ = integer |
| Hunting tooth numbers (optional) | $Z_r$, $Z_s$, and $Z_p$ have no common factors |
| Non-factorising tooth numbers (optional) | $N_p$ is not a factor of $Z_r$, $Z_s$, or $Z_p$ |

The next step is to select a starting combination. For example, a large number of small teeth is good for efficiency, so a tooth number combination with a small module/high tooth count should be selected as a starting point. If standard tooling is required for the application, the gear tooth module can be selected from standard values.

Providing a planetary gearset design having a predetermined number of teeth, and predetermined values of macrogeometry parameters (face width, module, pressure angle, helix angle, and addendum modification coefficient), Table 2 below, captures the main interactions between design variables and design targets in a simple format, and summarises the effect on the design targets of changing the tooth number and macro-geometry parameters.

This table is the result of sensitivity studies, in order to measure the effects of gear macro-geometry parameters on efficiency, contact and bending strength, and transmission error.

## Table 2 - Dependencies between design variables and design targets

| | Increased number of teeth | Increased helix angle | Increased face width | Increased pressure angle | **Increased centre distance** | **Increased sun PSC** |
|---|---|---|---|---|---|---|
| **Transmission error** | + | + | + | - | - | - |
| **Efficiency** | ++ | + | - | ++ | + | - ~ |
| **Bending strength** | -- | + | + | + | + | - |
| **Contact strength** | ~ | + | + | + | ~ | - |
| **Overall design** | + | ++ | + | ++ | ~ | - |

**Key:**
- **++ Advantageous**
- **+ Slightly advantageous**
- **~ Neutral**
- **- Slightly disadvantageous**
- **-- Disadvantageous**

Table 3 below explains how and why the changes in macrogeometry affect the design targets. In the table, the font type indicates whether the change is advantageous (underlined), disadvantageous (italicised), or neutral (not underlined, not italicised).

**Table 3 - Interactions between design variables and design targets**

| | Transmission error | Efficiency | Bending strength | Contact strength | Contact ratio |
|---|---|---|---|---|---|
| Increased number of teeth | TE reduced due to increased contact ratio | Sliding loss (and wear on the teeth) reduces because the contact path is shorter in smaller teeth. | *Bending strength reduces because the teeth are smaller* | No effect | Contact ratio increases |
| Increased helix angle | TE reduced due to increased contact ratio: more pairs of teeth in contact at one time give a smoother mesh | Slightly advantageous | Increased contact ratio is better for bending strength; more pairs of teeth in contact can share the load | Increased contact strength | Contact ratio increases |
| Increased face width | TE decreased | *Increased sliding loss* | Bending strength increases because the teeth are thicker | Increased contact strength | Contact ratio increases for helical gears |

(continued)

| | Transmission error | Efficiency | Bending strength | Contact strength | Contact ratio |
|---|---|---|---|---|---|
| Increased pressure angle | *Increased TE due to reduced tooth height* | Power loss decreases with increasing pressure angle | Higher pressure angles result in teeth that are thicker at the base, with greater bending strength. However, higher pressure angles require specialist manufacturing tools. | Slightly increased contact strength | Contact ratio increases |
| Increased centre distance | *Disadvantageous* | Slightly advantageous | Slightly advantageous | No effect | No effect |
| Increased sun PSC | *Disadvantageous* | Best when PSC equally split | *Disadvantageous* | *Disad vantageous* | No effect |

Thus modifying one or more macro-geometry parameters are chosen for modification such that the positive effects of one macrogeometry parameter on the design target counteract any negative effects of another macrogeometry parameter, and a design for planetary gearset meeting the one or more design targets is produced.

Sensitivity studies have shown that:

High pressure angles have the effect of increasing both durability and efficiency. There is a slight negative effect on transmission error, but if this is an issue it can be compensated for with other design changes.

High helix angles are advantageous for noise, efficiency, and bending and contact strength.

An increased face width is advantageous for noise and contact and bending strength, but disadvantageous for efficiency (and may not always be possible given packaging constraints)

Increasing the module/decreasing the number of teeth has no effect on contact strength, is beneficial for bending strength, but is detrimental for efficiency.

Increasing the planet tooth count by one from the theoretical value is beneficial for bending and contact strength, with only a small reduction in efficiency.

The effects of increasing the centre distance from the standard value are complex so it is not feasible to optimise the gearset this way as part of a simple step-by-step process.

Lower sun profile shift coefficient is marginally better for contact and bending strength and for transmission error, but this effect is outweighed by consideration of efficiency.

Gear sliding losses are significantly lower when the profile shift is divided equally between the sun and planet gears.

Non-standard modules and pressure angles will require non-standard tooling, so may not be economically feasible for low-volume cost-sensitive applications.

This section describes how the insight into effects of macro-geometry parameters on design targets can be leveraged in the design process, in order to balance the different targets and counteract any negative effects of design changes.

Increasing the tooth count is beneficial for efficiency, though this means that the teeth are smaller and therefore the change has a negative effect on bending strength. Increasing helix angle and pressure angle can improve the bending strength, as well as other targets. Larger face widths are mostly advantageous, if permitted by the packaging constraints. A centre distance slightly above the theoretical value may be useful, and sun PSC should be low. Most of the disadvantages of changing the variables in the way described above will be compensated for by other design changes, and a net efficiency benefit should result.

Therefore, the first step in macrogeometry design is to select a tooth number combination with a small module/high tooth count. The second step is to counteract the resulting negative effect on bending strength from reducing the size of the teeth by one or more of the following:

increasing the pressure angle (if standard tooling is required, the pressure angle can be selected from standard values);

increasing the helix angle (not applicable in spur gearsets);

increasing the face width to the maximum allowed by the packaging space (in some applications this will not be possible);

increasing the centre distance to a little above the theoretical value;

and any negative effects of the above changes on other design targets are outweighed by the benefits of having smaller teeth. If the targets for bending strength are not met, a different combination of tooth numbers must be chosen, with a larger module.

The calculation of efficiency can be carried out using a range of different analytical methods. Standard methods have the disadvantage of not considering the lubricant frictional properties. The following standard methods for calculating gear mesh losses are commonly used:

1. A constant friction coefficient is assumed, loaded tooth contact analysis (LTCA) is used to calculate loads and local velocities on the gear teeth, then the power loss is calculated as the friction coefficient multiplied by the load and the sliding velocity.

2. ISO 14179 considers only the lubricant viscosity, not the frictional characteristics of the lubricant itself (which depend on which base oil(s) and additive(s) the lubricant contains). Lubricant friction characteristics can vary significantly, so the lack of consideration for lubricant properties is a major limitation of the standard.

An alternative to these analytical methods is to use actual test data in the efficiency calculation. For example, a mini traction machine (MTM) can measure the Stribeck curve and slip curve of a lubricant. The test is easy to do, the machine is small and widely available, and can take measurements at different temperatures. The measured data (from an MTM) can be used with loads and local velocities calculated by LTCA to calculate the power loss and related gear mesh efficiency.

Figure 7 illustrates that two lubricants with similar viscosity but different additives and different frictional properties would give the same value for efficiency according to the ISO 14179 calculation, but give different values for efficiency when calculated using test data from MTM.

In current practice, the lubricant is considered only near the end of the design process. Using test data as an input to efficiency calculations not only allows the lubricant performance to be included in the design, but also opens up the potential for the oil company to improve the performance of the lubricant. Data from simulation that characterises the loading and contact conditions under all operating conditions can be made available to the oil company early in the design phase, so the choice of additives and base oils to be used in the lubricant can be decided based on real information about the operation of the gearbox.

Micro-geometry optimisation is the process of fine tuning the macro-geometry design in order to change the shape of the area on the gear tooth flanks that are in contact as the teeth mesh. This area is called the contact patch. It is possible to optimise the size and position of the contact patch in order to achieve optimal performance in terms of NVH, durability and efficiency. Micro-geometry modifications remove small amounts of material from the gear tooth (resulting in a gear tooth that is no longer a perfect involute). The amount of material removed can be in the order of tens of microns up to hundreds of microns depend on the size of the gear.

Fundamental flank modifications can be applied in the involute direction - profile crowning (barrelling) and profile slope - and/or in the axial direction - lead crowning and lead slope. In both directions, both linear and parabolic tip and root relief are available. These are predominantly used for TE minimisation.

Figure 8 illustrates the target form by applying profile and lead crowning, which have the effect of bulging the gear flank in the profile and axial directions respectively. Profile crowning has the same effect as applying tip and root relief, and can be useful for gear mesh power loss improvement. However, the bulging of the gear flank can reduce the size of the contact patch, leading to an increased contact stress $\sigma_H$, and therefore an adverse effect on durability and NVH.

Lead crowning is commonly used by gear designers to reduce the sensitivity of the gear mesh to misalignment.

This reduces the chances of edge loading (where the contact patch reaches the edge of the tooth rather than remaining in the centre of the flank), which is unfavourable for durability since the likelihood of pitting increases.

The first illustration in Figure 9 shows a combination of barrelling and lead crowning together. Clearly it can be seen that the contact area is reduced, and thus the contact stress $\sigma_H$ may increase significantly. The second illustration in Figure 9 is an example of linear tip relief, where some material is removed from the tip of the tooth flank. The position of the removed material is defined by the roll distance from the base tangent, illustrated schematically in Figure 10. Tip relief has the advantage of easing the flanks into the mesh and avoiding tip contact. The variation in mesh stiffness is minimised as the contact changes between one and two teeth, and therefore there is a reduction in TE. Tip relief can also have the effect of increasing mesh efficiency, as will be discussed later.

Tip relief can be linear or parabolic. Parabolic tip relief is not as effective as linear tip relief for improving mesh efficiency, since less material is removed from the flank. This is demonstrated in Figure 11. Although linear tip relief is more effective for increasing mesh efficiency, the stress gradient along the flank will be greater, ultimately leading to a higher contact stress. The converse is true for parabolic relief.

Micro-geometry studies can be automated in computer implementations using the Design of Experiments method (DoE). This method allows the entry of parameters and their tolerances so as to investigate all permutations possible within the defined tolerances. Once the macro-geometry of the gears has been selected, then the optimum tip relief to be applied to the chosen macro-geometry design can be determined using DoE.

High lead crowning has the advantage of reducing the sensitivity of the gear mesh total misalignment $F_{\beta x}$ by ensuring that the contact patch is in a central position on the gear tooth flank. However, this is at the expense of increased contact stress $\sigma_H$.

It is common to apply 'short' tip relief to gears where the emphasis is to minimise TE under light loads. This involves removing only material very close to the tip. Normally, for contact ratios < 2, tip relief is applied at the point of highest single tooth contact (HPSTC), since this is where the maximum tooth deflection would occur. However, for gears with higher contact ratios, the HPSTC can be very close to the pitch point. Therefore, applying relief at this point would result in 'long' tip relief, which is not recommended for optimal TE under light loads.

Reducing the tooth height by introducing tip relief has the advantage of easing the teeth into the mesh, thereby reducing the force $f(x)$ in this region. A reduced force also has the benefit of running the gear mesh at a lower temperature, thus minimising the risk of pitting due to thermal stress in the lubricant. Reduced tooth heith means that the contact length is reduced, leading to lower power losses due to the gear mesh and therefore higher efficiency.

There are many factors to consider when optimising the shape and size of the contact patch. A large contact patch is good for durability (the load is spread over a wider area, resulting in lower stress on the tooth surface) When more load is applied, the size of the contact patch expands. It is important to keep the contact patch away from the edges of the gear tooth - if the tip of one tooth makes contact with the edge of a meshing tooth, the resulting wear can reduce the durability of the tooth. Tip contact can be prevented by barrelling and/or tip relief. Lead crowning reduces sensitivity to misalignment. All of these considerations mean that there are multiple parameters to vary, and multiple design targets (sometimes in opposition). Design of Experiments (DoE) is therefore a good method of evaluating all options and finding an optimum design.

The method for designing the planetary gearset also includes a calculation of a sideband distribution resulting from the selected combination of tooth and planet numbers and comparing sideband distribution with a design target for sideband distribution. This can include a sideband distribution resulting from the selected combination and modifying planet phasing and tooth number when the sideband distribution is outside the design target for sideband distribution. Furthermore, calculating the sideband distribution can include using run out/assembly errors and transmission error.

The following sections describe in more detail the physics of how changes in macro-geometry alter the efficiency, durability, and NVH performance of the planetary gearset.

The profile shift coefficient (PSC) defines how much of the involute forms the flank of the tooth above and below the pitch circle. Figure 5 illustrates how the PSC affects the shape of the tooth when the same involute is used.

The height of the tooth above and below the pitch circle are called the addendum and dedendum respectively ($h_K$ and $h_F$ in Figure 5). The PSC is the difference between these two ($X = h_K - h_F$). Note that the PSC, $h_K$, and $h_F$ are all dimensionless coefficients; the actual dimension is the coefficient multiplied by the module. A tooth with zero PSC has equal addendum and dedendum (Figure 5, left); a tooth with positive PSC has addendum greater than dedendum (Figure 5, centre); and a tooth with negative PSC has dedendum greater than addendum (Figure 5, right).

There are two possible approaches to reduce the level of vibration in planetary gearsets: reducing the source of the noise, or changing the way in which the noise propagates through the system. The invention incorporates both of these approaches.

Reducing the source of the noise (transmission error) can be achieved via micro-geometry modifications, as will be discussed below.

Reducing the propagation of noise through the system can be achieved by optimising the number and phasing of planets and the tooth numbers. The transmission error has sidebands which can have greater amplitude than the mesh frequency itself. Signals from the mesh points of different planets can cancel each other out depending on the phase relationship between the planets. Some sidebands and vibration modes can be cancelled out by careful selection of tooth and planet numbers and mesh phasing.

In theory, involute gear teeth mesh perfectly smoothly. In practice, any system will have some slight errors, which can include tooth profile errors, misalignments, run out, or eccentricity due to manufacturing errors or deflection of shafts under load. These errors result in the mesh not being perfectly smooth and the position of the driven gear tooth flank deviating slightly from its theoretical tooth position. This deviation in position is the transmission error, and causes an excitation at the mesh frequency.

Noise in planetary gearsets is a more complicated problem than in gear pairs. For gear pairs, transmission error is generally considered a good measure of noise. The noise in a planetary gearset, however, cannot be adequately represented solely by transmission error at a single frequency (the meshing frequency). Modulation in a planetary gearset causes sidebands at either side of the meshing frequency, which can sometimes be higher in amplitude than the centre frequency.

It should be emphasised that transmission error calculation is more complicated for planetary gearsets, because the different meshes in the gearset are highly coupled, and it is difficult to predict transmission error by considering the meshes separately. Also, the torque transmitted through the gear mesh may vary with time if the load is shared unequally between the planets.

In planetary gearsets, different modifications are required to minimise the static transmission error and to minimise the dynamic response. This is a significant result, because it contradicts conventional wisdom, which holds that the static transmission error correlates well with dynamic behaviour and that by minimising the static transmission error the overall vibration response of the gearset can be reduced.

In summary, while transmission error at the meshing frequency is an appropriate measure of noise for gear pairs, the situation is more complicated for planetary gearsets.

Planetary gearset transmission error can be defined as the difference between the rotational position of the sun (input) and the carrier (output), analogous to the transmission error of a gear pair. For evenly spaced in-phase planets, the planetary gearset transmission error is large because all of the forces from the mesh points are equal and opposite, so the signals from the different mesh points reinforce. For unevenly spaced planets, however, the planetary gearset transmission error is lower because the out-of-phase signals mostly cancel each other out. The transmission errors of the individual meshes in gearsets with unequally spaced planets are not equal, so there is a net transverse force on the sun.

This is another example of trade-offs between different design targets: equal spacing is good for even load-sharing between the planets and reducing the net transverse force on the sun, but unequal spacing is best for minimising the planetary gearset transmission error because the meshes are out of phase. Also, out-of-phase meshes can reduce the amplitude of sidebands, as will be discussed later.

Modulation in a gearset can cause sidebands. In planetary gearsets, the effects of planet phasing can reinforce to produce larger sidebands, which can sometimes be higher in amplitude than the centre frequency. Sidebands in planetary gearsets have three principal sources:

1. Modulation caused by variation in transmission paths

Noise is generated at every position where two gears are in contact (mesh points). Consider a transducer mounted at a fixed position on or near the ring gear, at which the vibration frequencies and amplitudes are measured. The vibration signal received at the transducer is the sum of the signals from all of the planet-ring meshes (assuming that the signals from the planet-sun meshes are negligible in comparison, as they have a much longer transmission path to the transducer).

The planet-ring mesh points rotate around the ring gear at the carrier rotation frequency. The transmission path (the distance between the mesh points and the transducer) will therefore vary as the carrier rotates. This causes a modulation in the amplitude of the signals at the carrier rotation frequency, as the signals vary in strength depending on the length of the transmission path. This amplitude modulation causes sidebands which appear at the mesh frequency +/- the carrier rotation frequency.

2. Modulation caused by relative movement in the planetary gearset

Any resultant force on the carrier will cause motion of the carrier away from its centre position. Since the carrier is rotating relative to the ground, this is an additional vibration at the carrier rotation frequency. Although this vibration does not modulate the amplitude of vibration, it does cause a frequency shift in some exciting forces in the system, so also causes sidebands which appear at the mesh frequency +/- the carrier rotation frequency.

3. Modulations caused by errors and misalignments

The two sources of sidebands already discussed occur when the signals from the planet-ring meshes have the same frequency and amplitude. In practice, manufacturing and assembly variability can change the shape of the signals and vary the amplitude. Deviations can be caused by runout, pitch errors, mounting errors, assembly errors, and displacements or misalignments under load. Any of these errors can cause additional modulations to the gear meshing frequency.

Determining the frequency content of errors allows prediction of the sideband orders. For example, "egg" shaped pitch-error or out-of-position error (e.g. radial force such as gravity) causes a once-per-revolution error; ovalisation (e.g. pitch error) causes a twice-per-revolution error; "triangle" shaped error (e.g. three point clamping of a ring gear) causes a three-per-revolution error.

It should be noted that an observed sideband may be due to several different sources. The existence of sidebands at at the mesh frequency +/- the carrier rotation frequency do not necessarily imply a position or runout error: sidebands of types 1) and 2) exist in perfect systems and give +/- one mesh order only. Errors and misalignments also give sidebands of type 3) beyond +/- one mesh order.

To predict the spectrum of sidebands, it is necessary for the analysis of the planetary gearset to include deflections, misalignments, and manufacturing errors in the model. The mesh misalignment used to calculate sidebands can be calculated based on one or more of non-linear bearing stiffness, shaft deflection, gear backlash, planet carrier stiffness, and housing stiffness. Transmission error can be calculated using loaded tooth contact analysis. Run-out and assembly errors. Run-out and assembly errors can also be included in the analysis.

The predicted magnitude of sideband excitation and the dynamic response of the system are used to calculate the extent to which an error (e.g. assembly error, tolerance, misalignment) can lead to high radiated noise. The dynamic response of the system to sidebands can be predicted using a 6 degree-of-freedom dynamic model.

Asymmetric sidebands have been observed, in which the sidebands appear on only one side of the meshing frequency. The vibration signal received at the transducer is the sum of the signals from all of the planet-ring meshes, which will be at different points in their cycle when the signal arrives at the transducer. The difference in phase means that some of the sidebands are reinforced and some are cancelled out, causing an asymmetric distribution of sidebands around the mesh frequency. The sideband distribution depends only on the number and spacing of planets, and the number of teeth on the ring gear.

In cases where the number of teeth on the ring gear is a multiple of the number of planets in the gearset, the phase of each planet's vibration is a multiple of $2\pi$ so the signals reinforce each other and produce a larger amplitude at the meshing frequency.

The frequencies and amplitudes of asymmetric sidebands in a planetary gearset can be predicted. The phase relationship between the signals generated at the different mesh points in the planetary gearset can be determined from the tooth numbers, planet positions, and speeds of rotation.

Consider a planetary gearset containing $N_p$ planet gears. It is assumed that all planets are identical, that the load is shared equally among the planets, that the meshing vibration produced by each planet is the same. The vibration perceived by a transducer at a fixed point on the ring will therefore be the linear sum of the vibrations perceived for the individual planets, which, because of their different positions relative to the transducer, will have different phases. The amplitude spectra of the individual planets are identical, therefore the amplitude of any component of the combined spectrum will be determined by the amplitude of the spectrum for a single planet at that frequency multiplied by the phasor sum of the different phase spectra.

The vibration of the nth sideband of the $m^{th}$ mesh harmonic received at the transducer is given by:

$$Q_{mn} = \sum_{i=1}^{Np} Q_{imn}$$

where $Q_{imn}$ is the contribution of the $i^{th}$ planet to the $n^{th}$ sideband of the $m^{th}$ mesh harmonic. The phase of $Q_{imn}$ is given by $Q_i=P_i(mZ_r+n)$, where Pi is the phase angle and $Z_r$ is the number of teeth on the ring gear.

For each sideband, the phasors Qi can be calculated for each planet and added together. If identical in value (in phase), they will reinforce and result in a sideband. If the phasors cancel, the sideband will be eliminated.

The phasing $P_i$ of the planets and the ring tooth number $Z_r$ are therefore instrumental in enabling sidebands to be cancelled.

Thus the step of selecting a starting combination comprises the step of selecting planet phasing. In particular, the number and phasing of the planets in a planetary gearset can be chosen such that the resulting tooth meshing cycles are in phase, counterphased, sequentially phased, or randomly phased. As well as the torques and thrust generated by the meshing cycles, the phasing can result in forces and tilting moments that reinforce, cancel, or neither. These forces are not constant during rotation, but fluctuate periodically due to transmission error.

When the signals are in phase, forces and tilting moments cancel, but the torques are reinforced, which amplifies the transmission error signal and can have adverse effects on other parts of the system. When the signals are sequentially phased, the torques cancel but the forces are reinforced. When the signals are counterphased (only possible with an even number of planets), both the torques and the forces cancel (see Figure 3 for an illustration).

The prediction of the frequencies and amplitudes of sidebands in a planetary gearset can be applied to reduce sideband noise; the planets in a planetary gearset can be designed with a relative phase such that the signals will cancel out and some of the sidebands are removed, assuming that the planets are equally loaded and that the geometry of the teeth is uniform. If the planets are not equally loaded, sideband amplitudes will be reduced but not entirely eliminated. It is not possible to eliminate the mesh order frequency and all of the sidebands completely by choosing tooth numbers, but it is possible to reduce the overall vibration response.

If the system has a resonance at a known frequency, the tooth numbers and planet numbers/phasing can be chosen such that a specific sideband is cancelled. If there is no specific resonance to avoid, the tooth numbers and planet numbers/phasing can be chosen to minimise the overall acoustic response of the system.

The sum of the RMS (root-mean-square) response of a frequency range either side of the meshing frequency can be used as a noise metric. Reducing amplitudes of individual sidebands does not necessarily reduce the overall response if the energy is spread across more sidebands (see Figure 4), so it is useful to consider a frequency range rather than individual sidebands.

In addition to transmission error and sidebands, planetary gearsets can have other vibration modes. The present invention additionally comprises: calculating the frequencies of other vibration modes in the planetary gearset; comparing the spectrum of vibration modes to a design target for vibration; and modifying any of {planet phasing, planet number, tooth number} when the vibration modes are outside the design target. These modes were characterised by Lin and Parker (1999, 2000) for equally-spaced planets. There are three kinds of modes: pure rotational, pure translational, and planet modes in which the planet gears deflect while the other members remain stationary.

Some planetary gear vibration modes can be suppressed by mesh phasing. Mesh phasing can be "tuned" to make vibrations cancel out for some vibration modes with simple design rules involving the selection of planet numbers, planet spacing, and tooth numbers.

Ambarisha and Parker (2006) [Ambarisha, V. and Parker, R. (2006) 'Suppression of planet mode response in planetary gear dynamics through mesh phasing', Journal of Vibration and Acoustics-Transactions of the Asme, vol. 128, no. 2, pp. 133-142. DOI: 10.1115/1.2171712] describe an example in which a vibration problem was resolved by changing tooth numbers in order to suppress a vibration mode and eliminate a resonance in the system. The condition for suppression of the lth mode depends on the value of $k_l$ = mod(l $Z_s$ /N), where $Z_s$ is the number of teeth on the sun gear. $k_l$ is an integer quantity that can take values between 0 and $N_p$-1, and $N_p$ is the number of planets. For each value of $k_l$, two of the three mode types will be suppressed and one will be excited. Table 3 summarises the rules for suppression of the planet, rotational, and translational modes for equally spaced planets, diametrically opposed pairs of planets, and pure rotational systems (with bearings modelled as rigid, so that all translational degrees of freedom are removed).

**Table 3: Rules for the suppression of vibration modes, taken from Ambarisha and Parker (2006).**

| | Rotational-translational system | | | Purely rotational system | |
|---|---|---|---|---|---|
| | *Planet mode* | *Rotational mode* | *Translational mode* | *Degenerate mode* | *Distinct mode* |
| Equally spaced planets, $k_l$ =$mod(lZ_s/N)$ | 0, 1, *N*-1 | $k_l \neq 0$ | $k_l \neq$ 1, *N*-1 | 0 | $k_l \neq 0$ |
| Diametrically opposed planet pairs, $lZ_s$ | *odd* (*N*=4); *no suppression* (*N*≥6) | *odd* | *even* | *no suppression* | *odd* |

This research has two important implications: in systems where there is a known resonance problem, the tooth numbers, planet numbers, and planet spacing can be chosen to eliminate vibration modes at that frequency, and in systems where the resonances are not known or spread out over a wide frequency range, equal planet spacing is generally better for noise because two thirds of the modes are suppressed.

It is well known in gear macro-geometry design that to reduce the height of the tooth for the same centre distance and same working normal pressure angle θ, the tooth normal module $m_n$ needs to be reduced (increases no of teeth). This has the effect of increasing the total contact ratio $\varepsilon_\gamma$ which is beneficial for durability and transmission error (TE). Additionally, for the same module $m_n$, increasing the working pressure angle θ increases the radius of curvature which generates stubbier teeth (same number of teeth) while also reducing the tooth height. However, the consequential reduced contact ratio can have an adverse effect on durability and TE.

Tooth height has a strong influence on the gear mesh efficiency. Power losses can be described in terms of the loss factor $H_v$, which is calculated as

$$H_v = \frac{1}{P_{et}} \frac{\int f(x) v_{slip}(x) dx}{f_t v_{tangential}} \quad .$$

$H_v$ can be minimised by reducing the $f(x)v_{slip}(x)$ term. The slip velocity $v_{slip}$ will be maximum furthest away from the pitch point (sliding motion) and zero at the pitch point (pure rolling motion). Thus it is useful to reduce the height of the tooth, which reduces the max slip velocity $v_{slip}(x)$.

A reduction in tooth height can be achieved by i) reducing the module, thus having a larger number of smaller teeth, or ii) introducing tip relief (as will be described later).

The pressure angle θ is the angle between the line of action at the pitch point and the tangent to the base circles. In Figure 6 this is the angle between the red line and the vertical. For low θ the shape of the gear tooth is almost rectangular, and as θ increases the base of the tooth gets thicker and the tip more pointed. At the extremes, θ = 0° would mean that the teeth would effectively be spokes with vertical sides so meshing gears would be locked together and unable to rotate. θ = 90° would yield gears that are perfect circles with no teeth at all.

Increased pressure angles result in reduced sliding and increased rolling of the gear mesh, thus reducing the gear mesh sliding losses and improving efficiency. Bending strength is also increased due to the shape of the gear tooth becoming thicker at the base.

Increasing pressure angle has the disadvantage of increasing bearing load in gear pairs. In planetary gearsets, however, the bearing load is reduced by increasing the pressure angle. The reduced bearing load results in improved durability and efficiency.

Increasingly, the industry is interested in designs with higher working pressure angles. The AGMA standard pressure angle was θ = 14.5°, but now pressure angles of 20° and 25° are usual for standard tooling. Hohn et al. (2007) have designed and tested gears with pressure angles of over 40°.

Given the advantages of a higher pressure angle, it is useful to consider the limitations on increasing it further. The main limitations are set out below:

> **Power transmission.** Consider the force F applied at the pitch point where two meshing gears are in contact. This force can be resolved into two components: F cos θ is the force transferring rotation from one gear to the other, and F sin θ is a separating force which tries to push the gears apart. A high pressure angle therefore reduces power transmission. In gear pairs, the separating force increases the load on the bearings, but in planetary gearsets, the symmetry of multiple planet meshes means that the vector sum of separating forces on the central members is small.

**Contact ratio.** High-pressure-angle gears have a lower contact ratio, as the short stubby shape of the teeth means that fewer pairs can be in contact at any one time. The total contact ratio must be >1, otherwise there would be periods where the teeth lose contact as the gears rotate. In spur gears this limits the pressure angle to about θ = 40°. For helical gears a low transverse contact ratio can be compensated for by the axial contact ratio, so even higher pressure angles can be achieved while maintaining the mesh.

**Tooling.** For low-volume cost-sensitive applications, it may not be economically feasible to commission new tooling. If standard racks are to be used in manufacturing the design, the pressure angle and module must be a standard value.

**Industry norms.** Gear designers are conservative and unlikely to accept radical designs without proof that the gears work. Current standards reflect the state of the industry several decades ago, and current industry practice lags behind the advancement of technology.

Relationship between working pressure angle and centre distance

In practice it is more realistic to focus on working pressure angle $\theta_w$ rather than the nominal pressure angle θ. The pressure angle is defined as the angle between the line of centres and the tangent to the contact point between meshing teeth. For gears with standard centre distance CD this point is on the pitch circle. However, if the working centre distance $CD_w$ is increased, the point of contact will move closer to the tip of the gear tooth, resulting in a higher working pressure angle. A gear can therefore be cut with a rack with one pressure angle but operate at a different pressure angle.

$$CD_w \cos\theta_w = CD \cos\theta$$

In planetary gearsets, the centre distance between sun and planets is another degree of freedom that does not affect the overall packaging space.

The centre distances are "standard" for "theoretical" tooth numbers $Z_p = Z_r - Z_s / 2$. In this case the working pressure angle is the same for the sun-planet and planet-ring meshes. When tooth numbers deviate from this equation (e.g. by changing the number of planet teeth), there are different working pressure angles for the two meshes. This is disadvantageous because the mesh with the lower working pressure angle will be inefficient. Therefore the theoretical number of teeth a useful design guideline. The centre distance can also be increased while keeping the tooth numbers the same. $\theta_w$ increases with increasing sun-planet centre distance, and is still equal for the two meshes. A profile shift coefficient needs to be applied to the gears at non-standard centre distances in order to maintain the mesh.

Designs with high helix angles are better for efficiency, noise, and bending and contact strength. For helical gearsets, it is therefore advantageous to increase the helix angle as far as is feasible. The only limitation on increasing helix angle is that the axial loads on the gears will be increased. The resulting higher loads on the bearings may lead to increased bearing losses and reduced bearing life. This effect can be mitigated by using double helical gears (two sets of gear teeth with helix angles in opposite directions to cancel out the axial forces), or by replacing the bearing with one with an increased load capacity. These changes incur additional cost, so may not be appropriate in all applications. It should be noted that some heavy-duty applications use spur gears; in these applications, helix angle optimisation will not be applied.

A further consideration for planetary gearset design is in how rigidly the gearset is mounted. There is a trade-off between rigidity and flexibility: rigidity gives good alignment, low misalignment and low run out, and flexibility gives optimum loadsharing between the planet gears and accommodation of errors. Dynamics can be included in this decision making process, by varying the rigidity of the system and simulating the system dynamic response.

**Claims**

**1.** A computer-implemented method for designing a planetary gearset meeting one or more design targets, said method comprising the following steps:

a. specifying a size and ratio of the planetary gear set;
b. calculating all valid combinations of tooth numbers and planet numbers that satisfy one or more constraints;
c. selecting a starting combination of tooth numbers, planet numbers, and planet phasing;
d. calculating a value for a design target for the gear set;
e. modifying one or more macro-geometry parameters; and
f. repeating steps c to e if a design target value is outside the design target range; **characterised in that** in the above step e), the macrogeometry parameters are chosen such that the positive effects of one macrogeometry parameter on the design target counteract any negative effects of another macrogeometry parameter and a design for planetary gearset meeting the one or more design targets is produced.

**2.** A method of claim 1, in which the step of selecting a starting combination comprises selecting a starting combination having a small module and a large number of teeth.

**3.** A method of claim 1 or claim 2, in which the design target is for bending strength, step f) comprising:

i. calculating a bending strength of the gear teeth;
ii. modifying one or more macro-geometry parameters;
iii. comparing the bending strength with the design target for bending strength and repeating steps i and ii when the bending strength is outside the design target for bending strength.

**4.** A method of any preceding claim, in which the macrogeometry parameter is module, step f) comprising:

reducing power loss by reducing a contact length between two meshing teeth;
increasing bending strength according to one or more of the steps of:

i) increasing the pressure angle;
ii) increasing the helix angle;

iii) increasing the face width; or
iv) increasing the centre distance;

wherein a loss of bending strength resulting from the reduction of the contact length between two meshing teeth is counteracted.

**5.** A method of any preceding claim additionally comprising the step of modifying one or more micro-geometry parameters, in which one or more of the following micro-geometry parameters is modified:

(i) profile crowning;
(ii) profile slope;
(iii) lead crowning;
(iv) lead slope;
(v) extent of tip relief;
(vi) form of tip relief (e.g. linear or parabolic);
(vii) extent of root relief; and
(viii) form of root relief (e.g. linear or parabolic).

**6.** A method of claim 5, in which the micro-geometry parameters are optimised by using the Design of Experiments method, which can be automated in computer implementations to identify all permutations possible within user-specified tolerances, and determine the effects on design targets in order for the user to select an optimum micro-geometry design based on a weighted combination of one or more design targets.

**7.** A method of any preceding claim comprising the additional steps of:

A. calculating a sideband distribution resulting from the selected combination; and
B. comparing the sideband distribution with a design target for sideband distribution and repeating steps c and A when the sideband distribution is outside the design target for sideband distribution.

**8.** A method of claim 7, in which the step of calculating the sideband distribution includes using run out/assembly errors and transmission error; or
using mesh misalignment and transmission error using loaded tooth contact analysis, in which mesh misalignment includes one or more the following factors:

i) non-linear bearing stiffness;
ii) shaft deflection;
iii) gear backlash;
iv) planet carrier stiffness; or
v) housing stiffness.

**9.** A method of claim 8, further comprising: calculating an extent to which high radiated noise is caused by an error.

**10.** A method of claim 7, in which the planetary gearset is part of a machine, and the sideband distribution includes a frequency that is a known resonance in the machine.

**11.** A method of claim 7, additionally comprising the steps of:

A. calculating the frequencies of other vibration modes in the planetary gearset;
B. comparing the spectrum of vibration modes to a design target for vibration; and
C. modifying any of planet phasing, planet number, tooth number when the vibration modes are outside the design target.

**12.** A method of any preceding claim, in which lubricant test data is integrated into an efficiency calculation using loaded tooth contact analysis.

**13.** A method of any preceding claim, in which the step of specifying a size and ratio comprises specifying a packaging space and calculating size from a ratio, torque capacity, face width and a constant.

**14.** A non-transitory computer readable storage medium encoded with instructions that, when executed by a processor, perform the steps of the method according to any preceding claim.

**15.** A machine including a planetary gearset designed according to the method of any of claims 1 to 13.

**Figure 1**

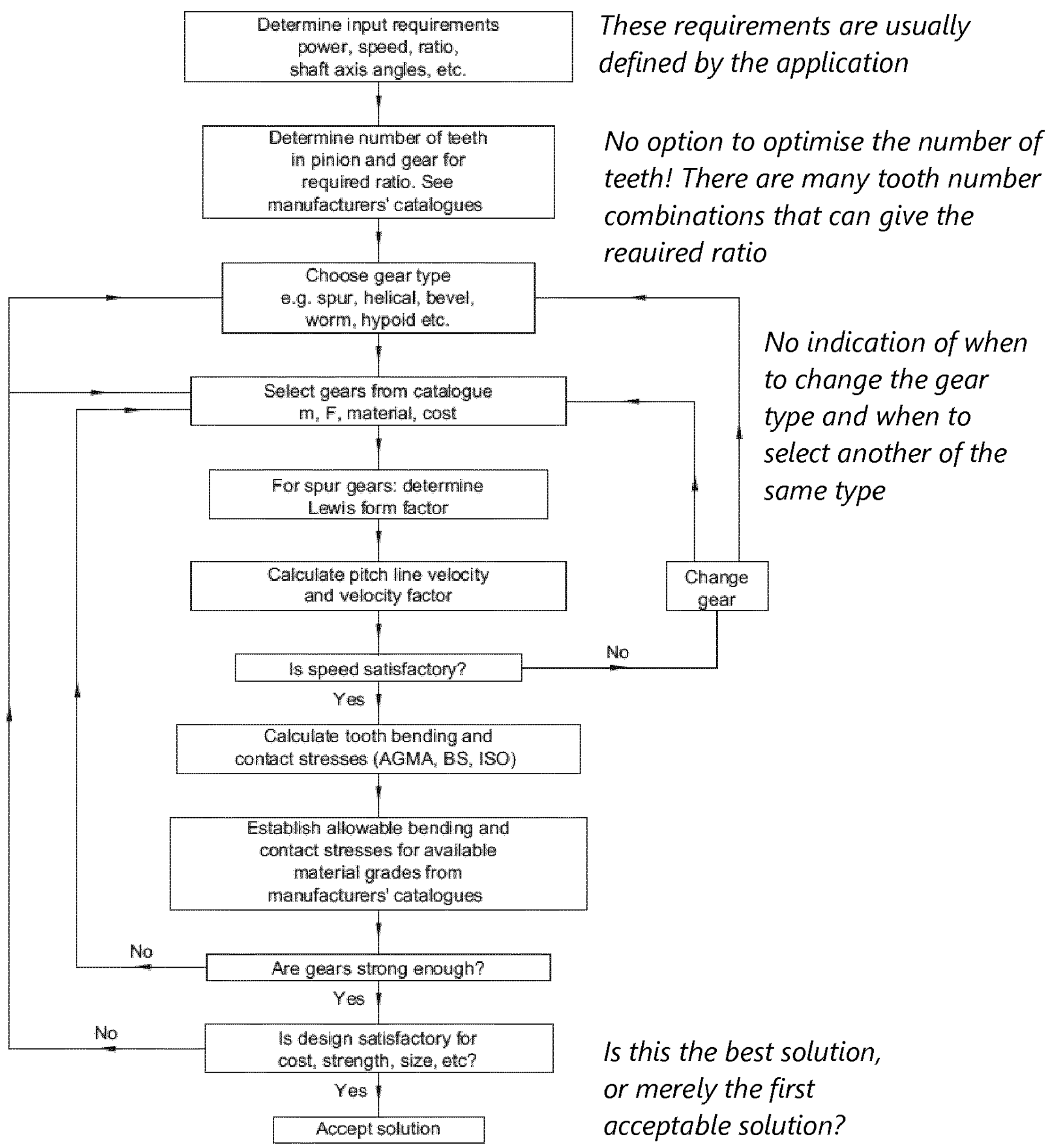
Determine input requirements power, speed, ratio, shaft axis angles, etc.
These requirements are usually defined by the application
Determine number of teeth in pinion and gear for required ratio. See manufacturers' catalogues
No option to optimise the number of teeth! There are many tooth number combinations that can give the reauired ratio
Choose gear type e.g. spur, helical, bevel, worm, hypoid etc.
No indication of when to change the gear type and when to select another of the same type
Select gears from catalogue m, F, material, cost
For spur gears: determine Lewis form factor
Calculate pitch line velocity and velocity factor
Change gear
Is speed satisfactory?
No
Yes
Calculate tooth bending and contact stresses (AGMA, BS, ISO)
Establish allowable bending and contact stresses for available material grades from manufacturers' catalogues
Are gears strong enough?
No
Yes
Is design satisfactory for cost, strength, size, etc?
No
Yes
Accept solution
Is this the best solution, or merely the first acceptable solution?

Figure 2

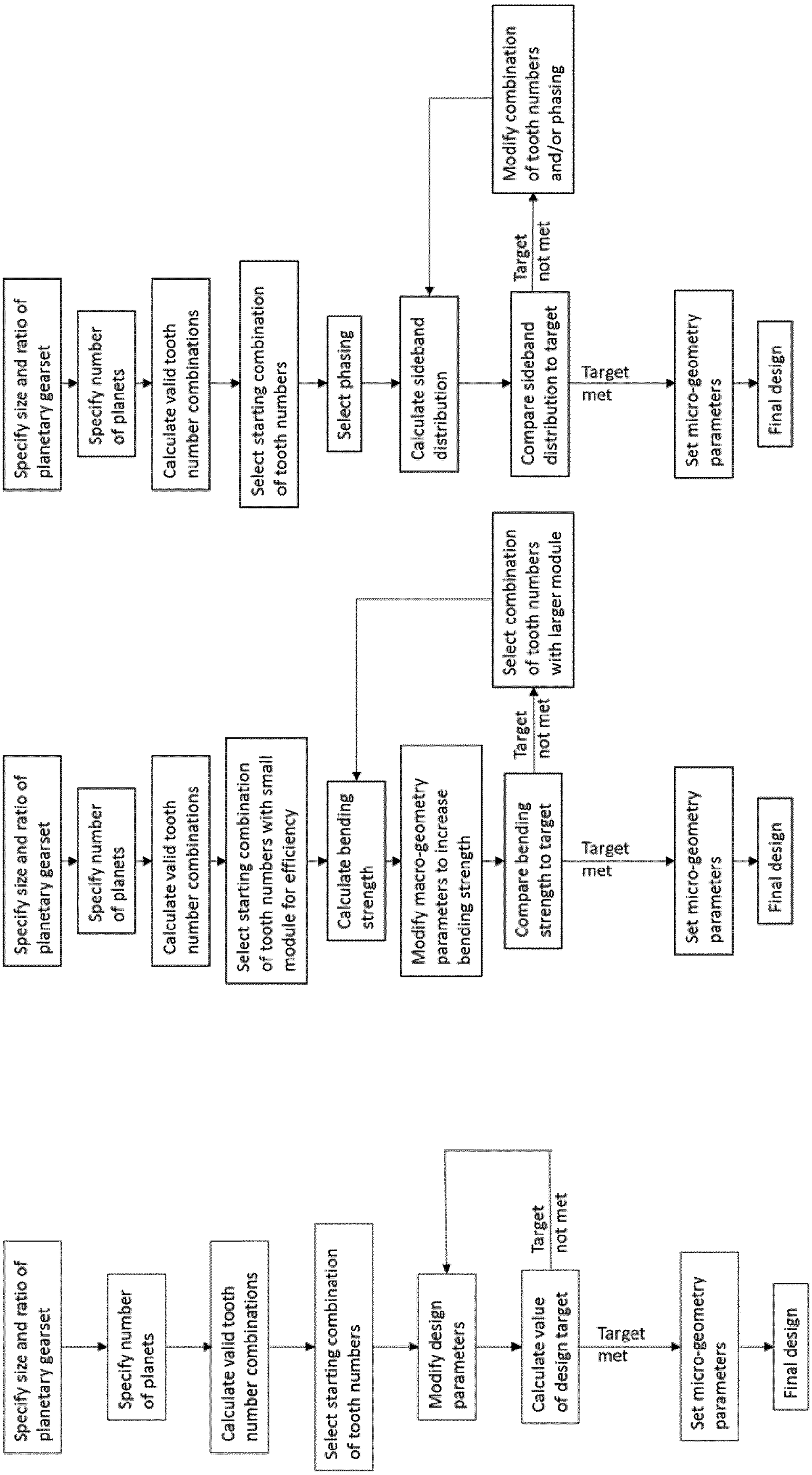
Specify size and ratio of planetary gearset
Specify number of planets
Calculate valid tooth number combinations
Select starting combination of tooth numbers
Modify design parameters
Calculate value of design target
Target not met
Target met
Set micro-geometry parameters
Final design
Specify size and ratio of planetary gearset
Specify number of planets
Calculate valid tooth number combinations
Select starting combination of tooth numbers with small module for efficiency
Calculate bending strength
Modify macro-geometry parameters to increase bending strength
Compare bending strength to target
Target not met
Select combination of tooth numbers with larger module
Target met
Set micro-geometry parameters
Final design
Specify size and ratio of planetary gearset
Specify number of planets
Calculate valid tooth number combinations
Select starting combination of tooth numbers
Select phasing
Calculate sideband distribution
Compare sideband distribution to target
Target not met
Modify combination of tooth numbers and/or phasing
Target met
Set micro-geometry parameters
Final design

Figure 3

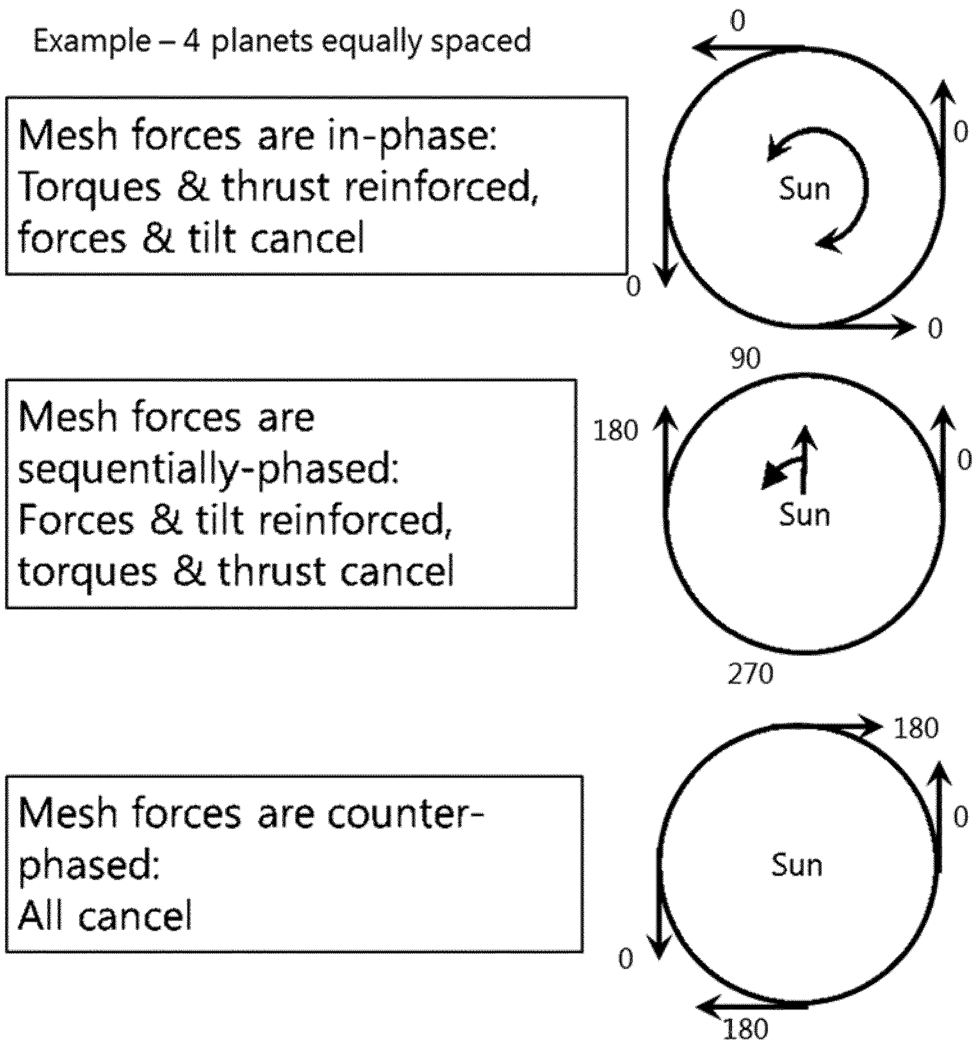
Example – 4 planets equally spaced
Mesh forces are in-phase: Torques & thrust reinforced, forces & tilt cancel
Sun
0
0
0
0
Mesh forces are sequentially-phased: Forces & tilt reinforced, torques & thrust cancel
90
180
0
Sun
270
Mesh forces are counter-phased: All cancel
180
0
Sun
0
180

Figure 4

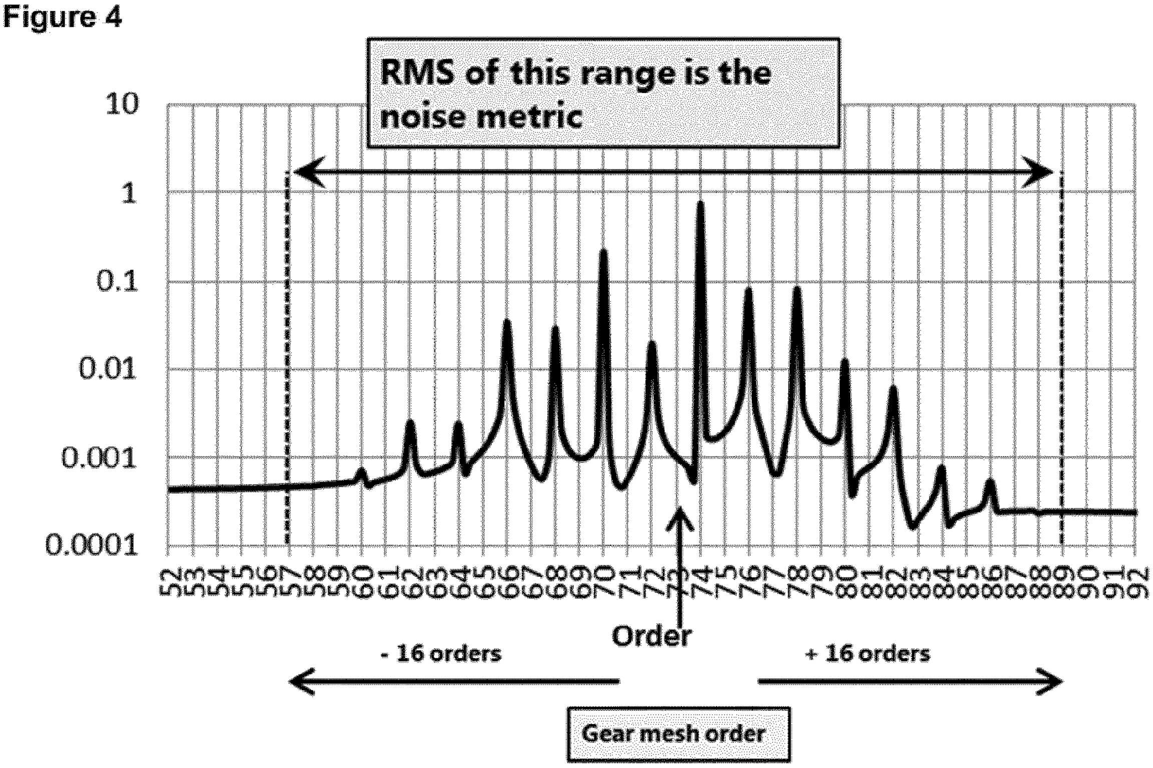


Figure 5

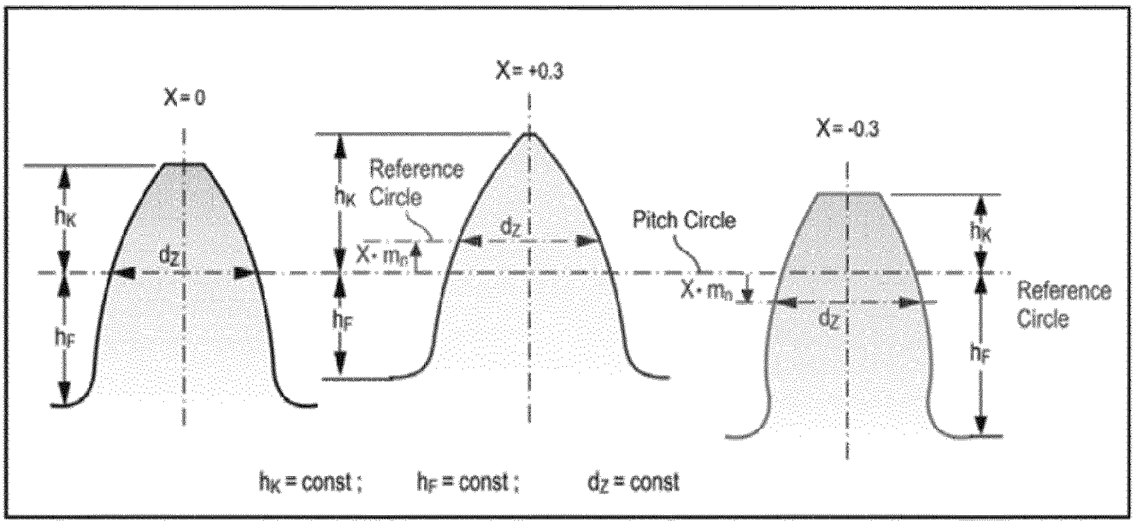


Figure 6

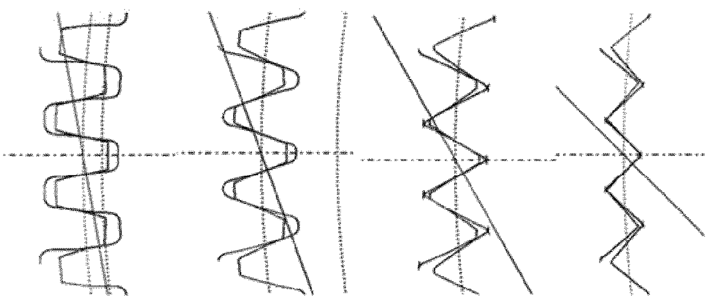

Figure 7

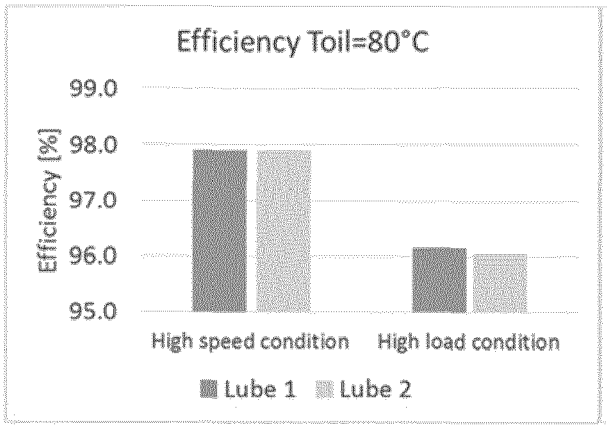


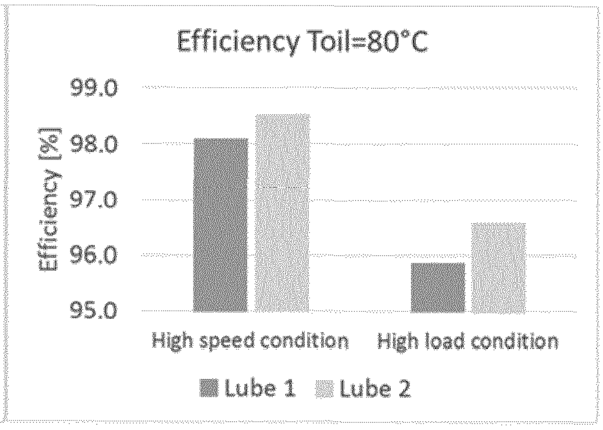


Figure 8

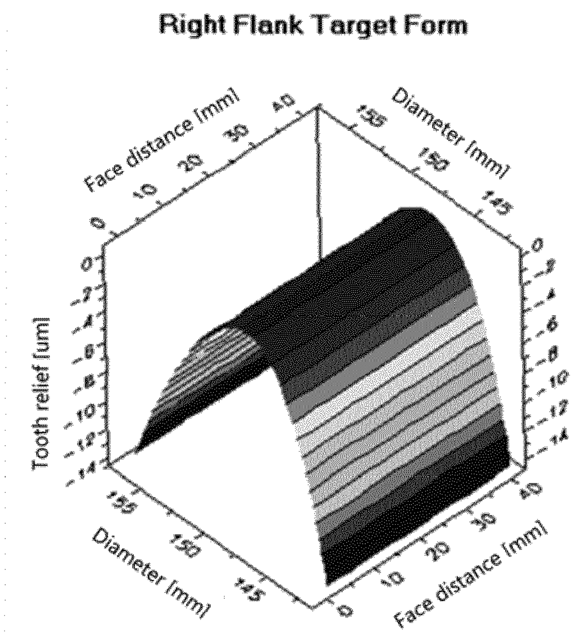


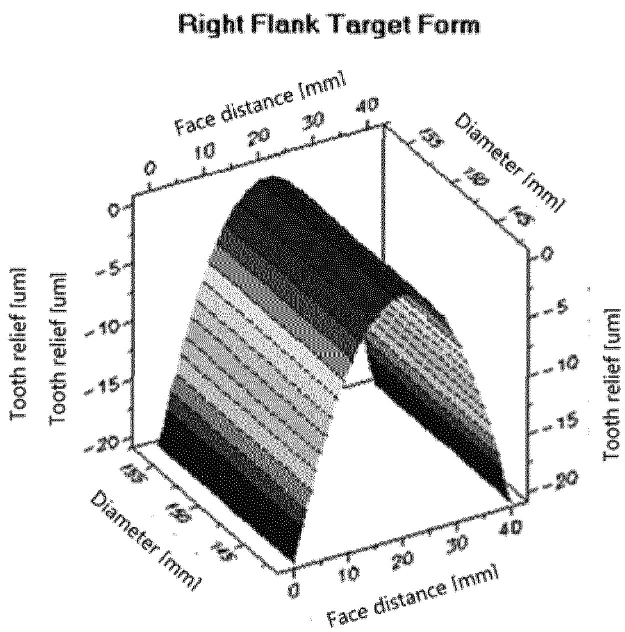

Figure 9

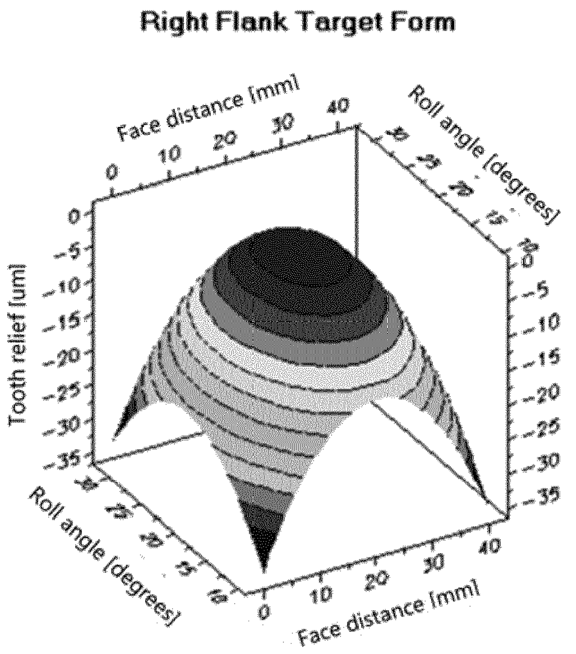


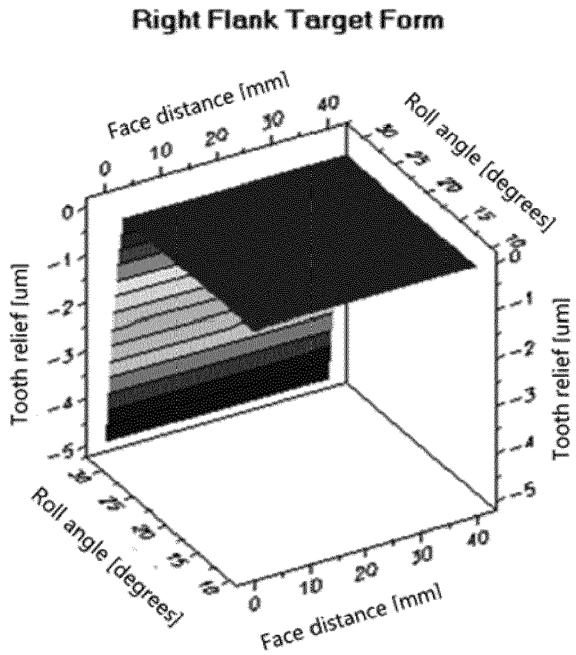


Figure 10

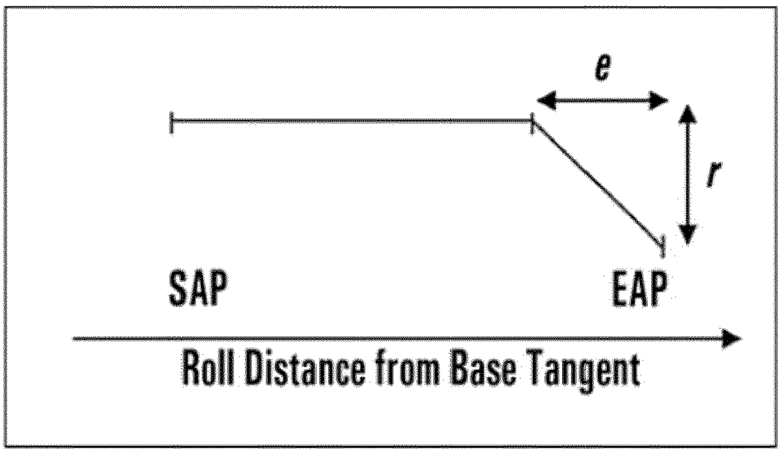

Figure 11

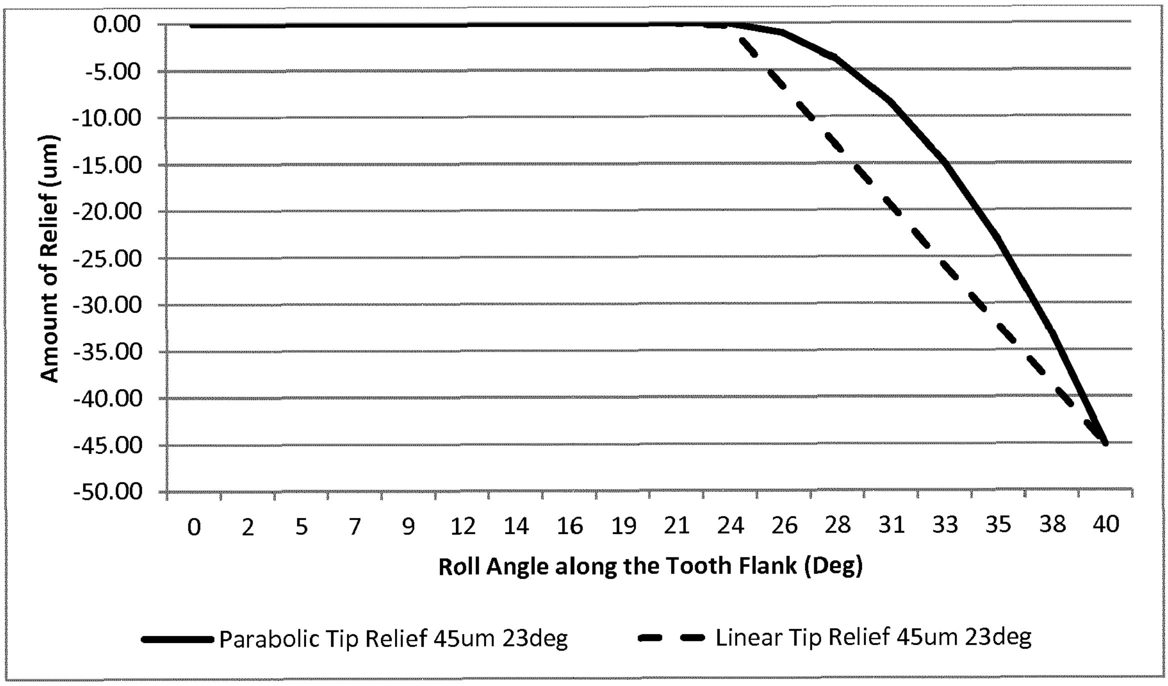
0.00
-5.00
-10.00
-15.00
-20.00
-25.00
-30.00
-35.00
-40.00
-45.00
-50.00
Amount of Relief (um)
0 2 5 7 9 12 14 16 19 21 24 26 28 31 33 35 38 40
Roll Angle along the Tooth Flank (Deg)
Parabolic Tip Relief 45um 23deg
Linear Tip Relief 45um 23deg

Europäisches Patentamt
European Patent Office
Office européen des brevets

# EUROPEAN SEARCH REPORT

Application Number
EP 17 17 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gumpoltsberger Gerhard: "Systematische Synthese und Bewertung von mehrgängigen Plantengetrieben" In: "Systematische Synthese und Bewertung von mehrgängigen Plantengetrieben", 7 August 2007 (2007-08-07), Fakultät für Maschinenbau der Technischen Universität Chemnitz, XP055390879, * page 175 - page 179 * * page 115 * * page 123 * ----- | 1-15 | INV. F16H57/00 G06F17/50 |
| X | NADEL B A ET AL: "AUTOMOBILE TRANSMISSION DESIGN AS A CONSTRAINT SATISFACTION PROBLEM: MODELLING THE KINEMATIC LEVEL", ARTIFICIAL INTELLIGENCE FOR ENGINEERING DESIGN, ANALYSIS ANDMANUFACTURING, LONDON, GB, vol. 5, no. 3, 1 January 1991 (1991-01-01), pages 137-171, XP008032722, * page 165 - page 166 * ----- | 1-15 | |
| A,D | US 2013/085722 A1 (JAMES BARRY [GB]) 4 April 2013 (2013-04-04) * the whole document * ----- | 1-15 | TECHNICAL FIELDS SEARCHED (IPC) F16H G06F |
| A,D | Bernhard-Robert Höhn ET AL: "Low Loss Gears", Gear Technolgy June 2007, 31 December 2007 (2007-12-31), XP055422280, Retrieved from the Internet: URL:http://s3.amazonaws.com/zanran_storage/www.geartechnology.com/ContentPages/16895532.pdf [retrieved on 2017-11-07] * the whole document * ----- -/-- | 1-15 | |

The present search report has been drawn up for all claims

| Place of search | Date of completion of the search | Examiner |
|---|---|---|
| Munich | 7 November 2017 | Belz, Thomas |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 17 17 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MAGALHAES L ET AL: "Influence of tooth profile and oil formulation on gear power loss", TRIBOLOGY INTERNATIONAL, ELSEVIER, AMSTERDAM, NL, vol. 43, no. 10, 1 October 2010 (2010-10-01), pages 1861-1871, XP027195740, ISSN: 0301-679X [retrieved on 2009-10-12] * the whole document * ----- | 1-15 | |
| A,D | Hermann Stadtfeld ET AL: "Operation Pressure Angle", Gear Technolgy 2013, 31 December 2013 (2013-12-31), XP055422277, Retrieved from the Internet: URL:https://www.geartechnology.com/issues/0513x/operating-pressure-angle.pdf [retrieved on 2017-11-07] * the whole document * ----- | 1-15 | TECHNICAL FIELDS SEARCHED (IPC) |
| A | S H Gawande ET AL: "Noise Level Reduction in Planetary Gear Set", Journal of Mechanical Design and Vibration Revised July Accepted July Journal of Mechanical Design and Vibration, 2 June 2014 (2014-06-02), pages 60-62, XP055422288, DOI: 10.12691/jmdv-2-3-1 Retrieved from the Internet: URL:file:///C:/Users/TB51412/AppData/Local/Microsoft/Windows/Temporary%20Internet%20Files/Content.IE5/7ITQOXXB/jmdv-2-3-1.pdf * the whole document * ----- | 1-15 | |

The present search report has been drawn up for all claims

2

| Place of search | Date of completion of the search | Examiner |
|---|---|---|
| Munich | 7 November 2017 | Belz, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 17 17 2902

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2017

| Patent document cited in search report | Publication date | Patent family member(s) | Publication date |
|---|---|---|---|
| US 2013085722 A1 | 04-04-2013 | US 2013085722 A1 | 04-04-2013 |
| | | US 2015347670 A1 | 03-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130085722 A1


### Non-patent literature cited in the description


- **HOHN, B.R. ; MICHAELIS, K. ; WIMMER, A.** Low Loss Gears. *Gear Technology,* June 2007, 28-35
- **MAGALHÃES, L. ; MARTINS, R. ; LOCATELI, C. ; SEABRA, J.** Influence of tooth profile and oil formulation on gear power loss. *Tribology International,* 2010, vol. 43 (10), 1861-1871
- **CHILDS, P.R.N.** Mechanical Design Engineering Handbook. Elsevier, 2014
- **STADTFELD, H. J.** Operating Pressure Angle. *Gear Technology,* May 2013, 57-58
- **AMBARISHA, V. ; PARKER, R.** Suppression of planet mode response in planetary gear dynamics through mesh phasing. *Journal of Vibration and Acoustics-Transactions of the Asme,* 2006, vol. 128 (2), 133-142